# EUROPÄISCHE PATENTSCHRIFT

(11) **EP 0 636 545 B1**
(45) Veröffentlichungstag und Bekanntmachung des Hinweises auf die Patenterteilung: **22.04.1998**
(21) Anmeldenummer: 94111274.0
(22) Anmeldetag: 20.07.1994
(51) Int. Cl.: B65D 19/12, B65D 77/06, B65D 19/10

(54) **Palettenbehälter**
Palletized container
Caisse-palette

(30) Priorität: 28.07.1993 DE 4325223
(43) Veröffentlichungstag der Anmeldung: 01.02.1995
(73) Patentinhaber: PROTECHNA S.A., 1701 Fribourg (CH)
(72) Erfinder: Schütz, Udo, D-56242 Selters / Ww. (DE)
(74) Vertreter: Pürckhauer, Rolf, Dipl.-Ing.

(56) Entgegenhaltungen:
- EP-A- 0 443 500
- DE-A- 4 237 889
- DE-C- 1 135 822
- GB-A- 2 139 983

## Beschreibung

Die Erfindung betrifft einen Palettenbehälter, der als Ein- und Mehrwegbehälter zum Einsatz kommt, mit einer Bodenwanne aus Blech oder Kunststoff, die einen Ablaufboden aufweist und auf einem durch einen Hubstapler, ein Regalbediengerät oder dgl. handhabbaren Palettenrahmen aus Metall, Kunststoff oder Holz befestigt ist, einem an der Palette lösbar befestigten, zusammenlegbaren Außenmantel aus einem Metallgitterwerk oder Blech und einem an dem Außenmantel anliegenden Stützeinsatz aus zu einem Paket zusammenlegbaren Wandteilen, wobei der Palettenbehälter wahlweise zum Transport und zur Lagerung von Flüssigkeiten mit einem dünnwandigen, an dem Stützeinsatz anliegenden Kunststoff-Innenbehälter, der einen Ablaufboden aufweist und von der Bodenwanne der Palette formschlüssig aufgenommen wird, oder zum Transport und zur Lagerung von Schüttgut mit einem Innensack aus Kunststoffolie oder Textilmaterial ausrüstbar ist und nach Herausnahme des Innenbehälters mit dem Stützeinsatz zur Beförderung und Lagerung von Stückgut einsetzbar ist. Ein derartiger Palettenbehälter ist aus der DE 42 37 889 A1 bekannt.

Die Notwendigkeit zur Einsparung von Rohstoffen und die gesetzlichen Umweltschutzvorschriften Zwingen die einschlägige Industrie dazu, Flüssigkeiten zum Transport und zur Lagerung in großvolumigen, auf dem Markt angebotenen, als Mehrwegbehälter ausgebildeten Palettenbehältern der gattungsgemäßen Art anstatt wie bisher in Fässern mit wesentlich geringerem Fassungsvermögen abzufüllen.

Der Erfindung liegt die Aufgabe zugrunde, den gattungsgemäßen Palettenbehälter dahingehend zu verbessern, daß er zu Leertransport und Lagerzwecken auf einfache Art und mit geringem Zeitaufwand zu einer kompakten Einheit mit minimalem Platzbedarf zusammengelegt werden kann und ebenso schnell und einfach wieder zum Transport und zur Lagerung von Flüssig-, Schütt- oder Stückgut betriebsfertig aufgebaut werden kann.

Diese Aufgabe ist erfindungsgemäß gelöst durch einen Palettenbehälter mit den Merkmalen des Patentanspruches 1.

Die Unteransprüche sind auf vorteilhafte und zweckmäßige Ausgestaltungen der Erfindung gerichtet.

Der erfindungsgemäße Palettenbehälter zeichnet sich durch folgende Vorteile aus:

Die einfache Faltkonstruktion des äußeren Gittermantels und des Stützeinsatzes und die Eingliederung eines Stauraumes in die Palette ermöglichen ein einfaches und schnelles Zusammenlegen der Bauteile des Palettenbehälters zu einer kompakten Einheit, die für den Leertransport und die Lagerung des Behälters einen minimalen Platzbedarf erfordert und dementsprechend niedrige Transport- und Lagerkosten verursacht. Ebenso schnell und einfach kann der zusammengelegte Behälter wieder betriebsbereit aufgebaut werden. Der Palettenbehälter ist nach Bedarf mit einem dünnwandigen Kunststoff-Innenbehälter zum Transport und zur Lagerung von Flüssiggut oder einem Innensack aus einer Kunststoffolie oder einem Textilmaterial zur Beförderung und zur Lagerung von Schüttgut ausrüstbar. Mit dem Stützeinsatz aus Wandplatten eignet sich der Palettenbehälter für die Beförderung und die Aufbewahrung von Stückgut und Halbzeug unterschiedlicher Art. Die zusammengelegte kompakte Behältereinheit ist aufgrund einer entsprechenden Ausbildung des Verschlußdeckels für den Stauraum der Palette mehrfach stapelbar. Schließlich kann durch die Abstützung des Kunststoff-Innenbehälters mittels eines Stützeinsatzes aus Wandplatten die Wandstärke des Innenbehälters wesentlich verringert und dadurch die durch Farben, Lacke u. dgl. umweltgefährdende Flüssigkeiten kontaminierte Kunststoffmasse erheblich verringert werden, so daß die Entsorgung dieser Kunststoffmasse durch Verbrennen unproblematisch ist.

Die Erfindung ist nachstehend anhand schematischer Darstellungen erläutert. Es zeigt
- Fig. 1: die Frontansicht eines Palettenbehälters mit Innenbehälter,
- Fig. 2: einen vergrößerten Teilschnitt nach Linie II-II der Fig. 1,
- Fig. 3: die Draufsicht auf den aufgerichteten Gittermantel und den zusammengelegten Gittermantel vor dem Einklappen in den Stauraum der Palette,
- Fig. 4: einen zu einer kompakten Einheit zusammengelegten Behälter im Schnitt mit einer darauf gestapelten Behältereinheit sowie
- Fig. 5: eine Verriegelung für die zusammenfaltbare vordere und hintere Gitterwand des Außenmantels an dem Aufsatzrahmen der Palette und
- Fig. 6: ein verschiebbares Scharnier zur schwenkbaren Befestigung einer Längswand des äußeren Gittermantels an dem Aufsatzrahmen der Palette jeweils in vergrößerter Darstellung.

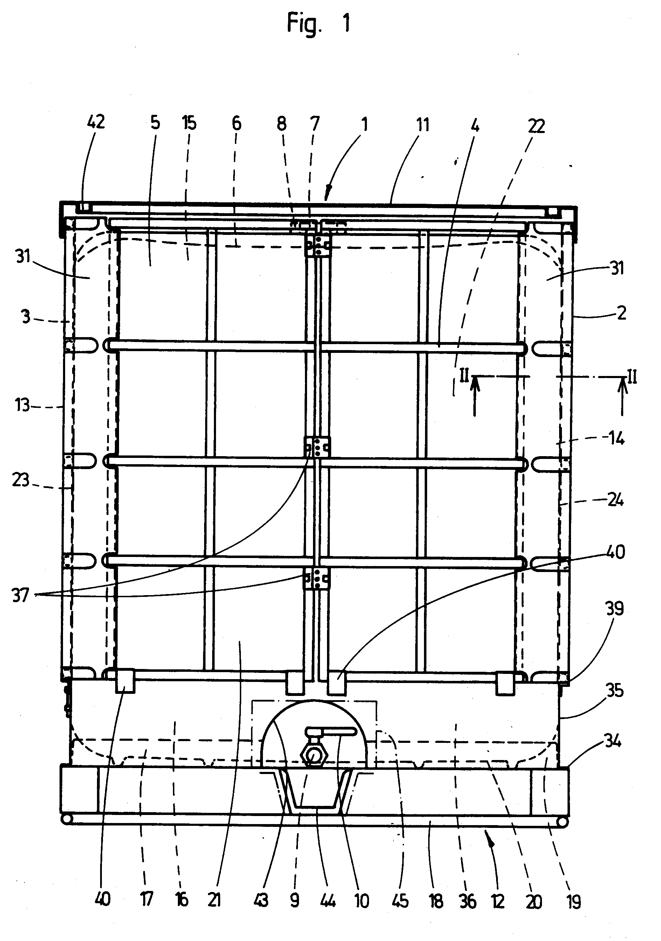

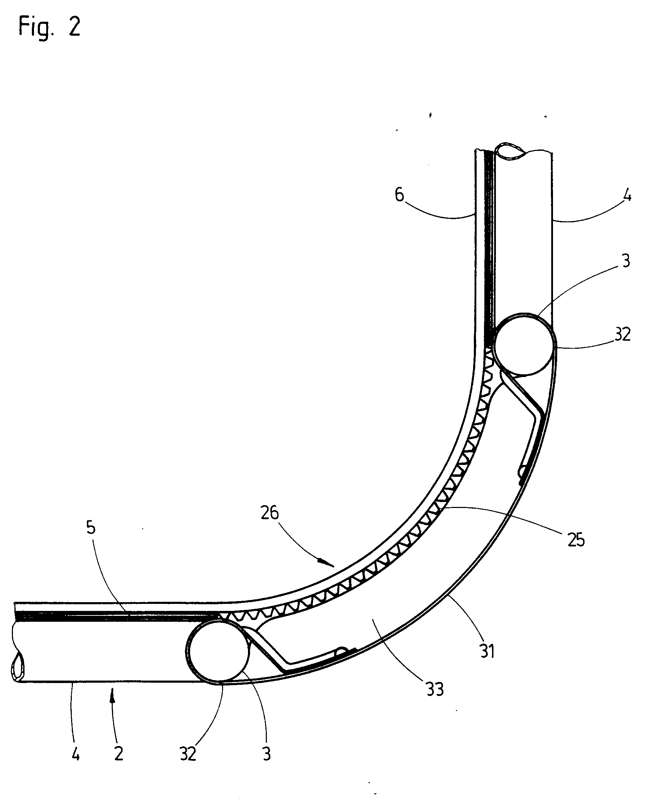

Der als Mehrwegbehälter verwendete Palettenbehälter 1 nach den Fign. 1 und 2 für den Transport und zur Lagerung von Flüssigkeiten unterschiedlicher Art weist als Hauptbauteile einen Außenmantel 2 aus sich kreuzenden senkrechten und waagrechten Gitterstäben 3, 4 aus Metall, einen in den Außenmantel einsetzbaren Stützeinsatz 5 aus glatten Wandteilen aus Kunststoff für einen austauschbaren, dünnwandigen Innenbehälter 6 aus Kunststoff, vorzugsweise Polyethylen, mit rechteckigem Grundriß und abgerundeten Ecken, der mit einem durch einen Schraubdeckel 8 verschließbaren Einfüllstutzen 7 und einem Entleerungsstutzen 9 zum Anschluß eines Entnahmehahns 10 ausgestattet ist, einen auf den Gittermantel 2 und den Stützeinsatz 5 aufgesetzten Verschlußdeckel 11 aus Kunststoff oder Blech und eine mittels Hubstapler, Regalbediengerät oder dgl. handhabbare Stahlpalette 12 mit euronormgerechten Längen- und Breitenabmessungen zum Tragen des Innenbehälters 6, des Stützeinsatzes 5 und des Gittermantels 2 auf.

Der als Blasteil gefertigte Kunststoff-Innenbehälter 6 mit einem von den Seitenwänden 13, 14 und von der Rückwand 15 zum Entnahmehahn 10 in der Vorderwand 16 leicht abfallenden Ablaufboden 17 wird von der auf einem palettenrahmen 18 befestigten Bodenwanne 19 mit einem dem Boden 17 des Innenbehälters 6 angepaßten Boden 20 formschlüssig aufgenommen. Die Bodenwanne 19 der Palette 12 ist als Tiefziehteil aus Blech gefertigt.

Die glatten, aus Kunststoffmaterial extrudierten Wandteile 21 - 24 des Stützeinsatzes 5 sind durch flexible Scharnierbänder 25 miteinander verbunden, die sich den abgerundeten Eckbereichen 26 des dünnwandigen Innenbehälters 6 anpassen (Fig. 2), und das vordere 21 und das hintere Wandteil 22 sind zusätzlich mittig faltbar ausgebildet.

Der Stützeinsatz 5 kann einteilig als Platte extrudiert werden, wobei die Platte durch in der Stärke reduzierte Streifen, die die Scharnierbänder 25 bilden, in die Wandteile 21 - 24 unterteilt wird. Zur Erhöhung der Flexibilität können in die Scharnierbänder 25 Kerben bzw. Rillen eingepreßt werden.

Ferner besteht die Möglichkeit, die Wandteile 21 - 24 des Stützeinsatzes 5 als gesonderte Platten aus Kunststoffmaterial zu extrudieren oder zu pressen und die Platten durch die Scharnierbänder 25 bildende Streifen aus flexiblem Kunststoff zu verbinden.

Die vier Gitterwände 27 - 30 des zusammenlegbaren Außenmantels 2 sind durch gerundete Eckbleche 31 mit an diesen angebrachten Scharnieren 32 miteinander verbunden, wobei die Form der Eckbleche 31 der abgerundeten Form der Eckbereiche 26 des Kunststoff-Innenbehälters 6 und den an diesen anliegenden Scharnierbändern 25 des Stützeinsatzes 5 angepaßt ist. Die Eckbleche 31 sind durch eingepreßte Sicken 33 versteift.

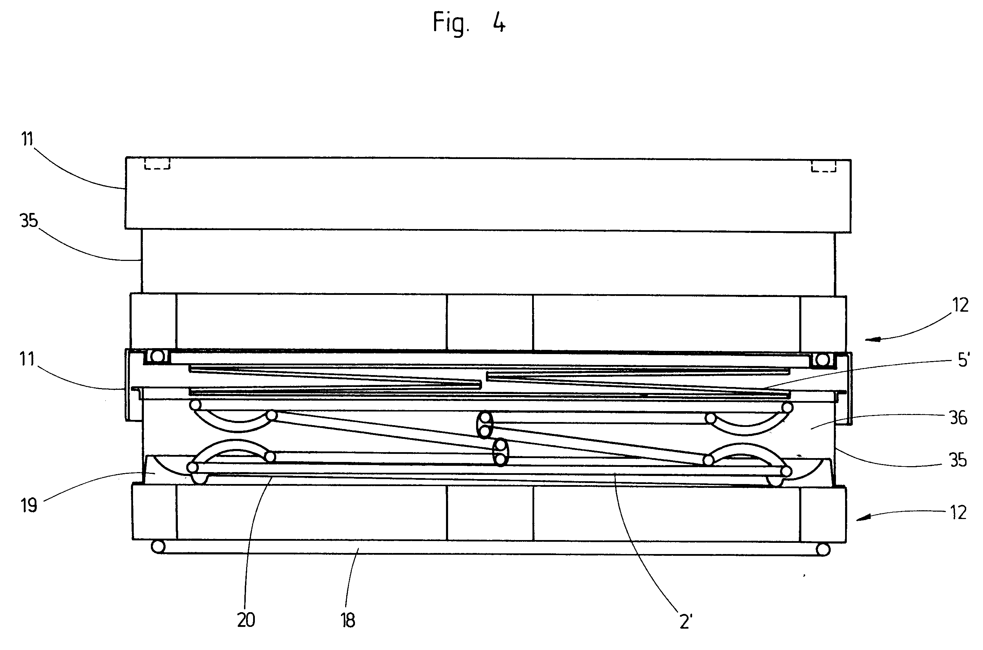

Auf dem Außenrand 34 der flachen Bodenwanne 19 der Palette 12 ist ein Aufsatzrahmen 35 aus Blech befestigt, der einen Stauraum 36 zur Unterbringung des Gittermantels 2 und des Stützeinsatzes 5 im zusammengelegten Zustand 2' und 5' enthält, wenn der Palettenbehälter 1 im Leerzustand zu Transport- und Lagerzwecken zu einer kompakten Einheit zusammengelegt wird (Fig. 4).

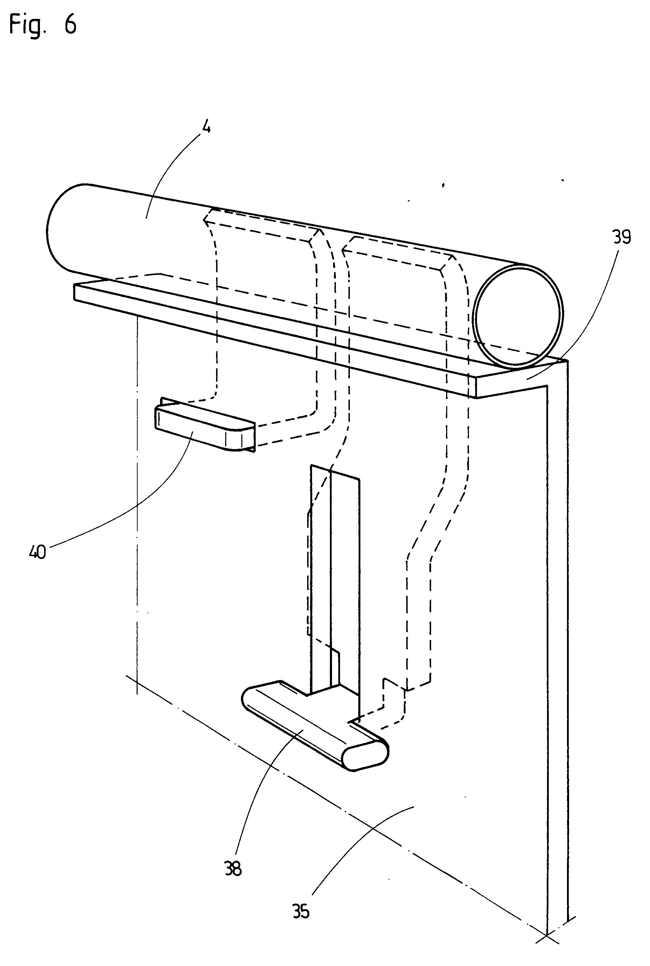

Die vordere 27 und die hintere Gitterwand 28 des Außenmantels 2 sind mittig geteilt, und die jeweiligen Wandhälften 27a, 27b und 28a, 28b sind durch Scharniere 37 miteinander verbunden. Die eine Seitenwand 29 des Gittermantels 2 ist mittels verschiebbarer Scharniere 38 an einem langen Abschnitt des oberen Randes 39 des Aufsatzrahmens 35 der Bodenwanne 19 der Palette 12 schwenkbar befestigt (Fig. 7). Die andere Seitenwand 30 oder beide Seitenwände 29, 30 sowie die Wandhälften 27a, 27b und 28a, 28 b der vorderen 27 und der hinteren Gitterwand 28 des Außenmantels 2 sind mittels lösbarer Krallen 40 an den beiden langen und den beiden kurzen Abschnitten des oberen Randes 39 des Aufsatzrahmens 35 befestigt (Fig. 5). Die vordere 27 und die hintere Wand 28 des Gittermantels 2 sind am oberen Rand 39 des Aufsatzrahmens 35 durch lösbare Verriegelungen 41 gesichert.

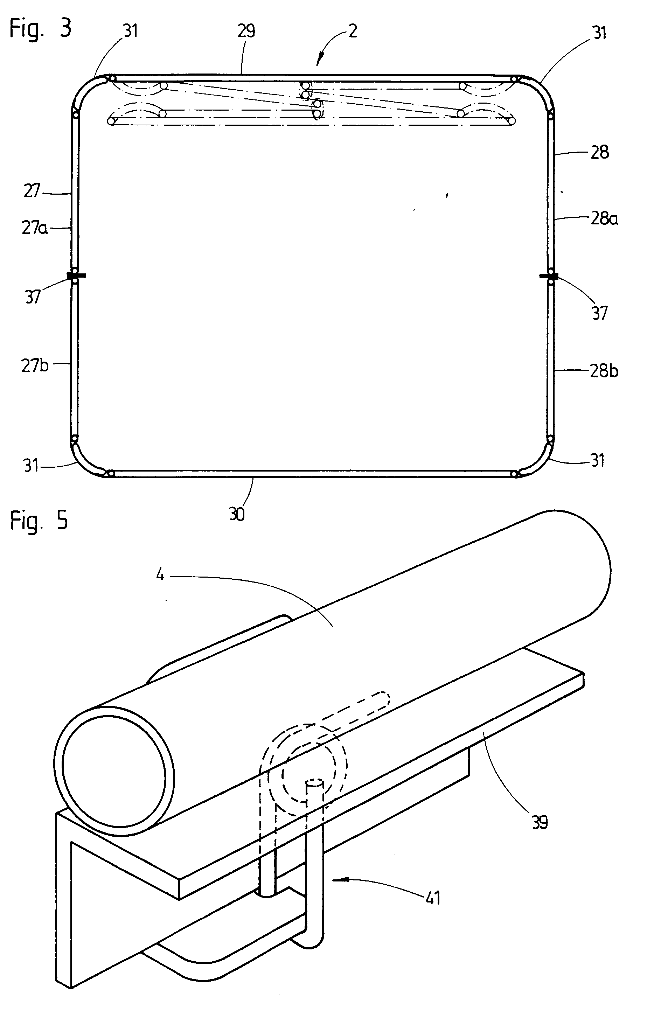

Beim zusammenlegen des Palettenbehälters 1 wird zunächst der leere Innenbehälter 6 und anschließend der Stützeinsatz 5 aus dem Gittermantel 2 herausgehoben. Danach wird der Stützeinsatz 5 zusammengefaltet. Nach dem Lösen der Verriegelungen 41 der Gitterwände 27, 28 werden diese sowie die Seitenwand 30 des Gittermantels 2 nach innen gedrückt und dadurch die Befestigungskrallen 40 der Gitterwände 28, 28; 30 von dem oberen Rand 39 des Aufsatzrahmens 35 gelöst, so daß der Gittermantel 2 aufrecht gegen die eine Gitterwand 29 gefaltet werden kann (Fig. 3). Der zusammengelegte Gittermantel 2 kann nunmehr in eine horizontale Position in den Stauraum 36 der Palette 12 eingeklappt werden. Der zusammengefaltete Stützeinsatz 5 wird auf den Gittermantel 2 gelegt, und schließlich wird der Stauraum 36 durch den Deckel 11 verschlossen.

Im Betriebszustand dient der Deckel 11 zum Verschließen des von dem Gittermantel 2 und dem Stützeinsatz 5 gebildeten Transport- und Lagerraum des Palettenbehälters 1. Zusätzlich zu dem Verschlußdeckel 11 wird der Gittermantel 2 durch einen nicht dargestellten, oberen Rahmen aus Diagonalstreben versteift.

In die Oberseite des Verschlußdeckels 11 ist eine umlaufende Rille 42 zur Aufnahme der Palettenrahmens 18 einer gestapelten, zusammengelegten Behältereinheit eingeformt (Fig.4).

Ohne den Kunststoff-Innenbehälter 6 kann der Palettenbehälter 1 zum Transport und zur Lagerung von Stückgut und Halbzeug unterschiedlicher Art verwendet werden. Bei diesem Einsatzfall des Palettenbehälters kann in die Bodenwanne aus Blech der Palette zusätzlich eine Kunststoffwanne eingesetzt werden.

Zum Transport und zur Lagerung von Schüttgut wird der Kunststoff-Innenbehälter des Palettenbehälters durch einen Innensack aus einer Kunststoffolie oder einem Textilmaterial ersetzt.

Zum Transport und zur Lagerung von Schütt- und Stückgut werden die für den Entnahmehahn 10 des Kunststoff-Innenbehälters 6 im Aufsatzrahmen 35 der Palette 12 vorgesehene Zugangsöffnung 43 und der vorne offene Mittelfuß 44 des Palettenrahmens 18 im Auslaufbereich unter dem Entnahmehahn 10 durch eine Platte 45 oder eine Klappe geschlossen.

## Patentansprüche

1. Palettenbehälter (1), der als Ein- und Mehrwegbehälter zum Einsatz kommt, mit einer Bodenwanne (19) aus Blech oder Kunststoff, die einen als Ablaufboden ausgebildeten Boden (20) aufweist und auf einem durch einen Hubstapler, ein Regalbediengerät oder dergleichen handhabbaren Palettenrahmen (18) aus Metall, Kunststoff oder Holz befestigt ist, einem an der Palette (12) lösbar befestigten, zusammenlegbaren Außenmantel (2) aus einem Metallgitterwerk oder Blech und einem an dem Außenmantel (2) anliegenden Stützeinsatz (5) aus zu einem Paket zusammenlegbaren Wandteilen (21-24), wobei der Palettenbehälter (1) wahlweise zum Transport und zur Lagerung von Flüssigkeiten mit einem dünnwandigen, an dem Stützeinsatz (5) anliegenden Kunststoff-Innenbehälter (6), der einen Ablaufboden (17) aufweist und von der Bodenwanne (19) der Palette (12) formschlüssig aufgenommen wird, oder zum Transport und zur Lagerung von Schüttgut mit einem Innensack aus Kunststoffolie oder Textilmaterial ausrüstbar und nach Herausnahme des Innenbehälters (6) mit dem Stützeinsatz (5) zur Beförderung und Lagerung von Stückgut einsetzbar ist, dadurch gekennzeichnet, daß auf dem Außenrand (34) der flachen Bodenwanne (19) der Palette (12) ein Aufsatzrahmen (35) aus Blech oder Kunststoff befestigt ist, der einen Stauraum (36) für den Außenmantel (2) und den Stützeinsatz (5) im zusammengelegten Zustand (2', 5') für den Leertransport und die Lagerung des Palettenbehälters (1) enthält.

2. Palettenbehälter nach Anspruch 1, gekennzeichnet durch einen Deckel (11) aus Kunststoff oder Blech zum Verschließen des von dem Gittermantel (2) und dem Stützeinsatz (5) gebildeten Transport- und Lagerraumes im Betriebszustand des Behälters (1) und zum Verschließen des Stauraumes (36) der Palette (12) im zusammengelegten Zustand des Behälters (1).

3. Palettenbehälter nach Anspruch 2, gekennzeichnet durch eine in die Oberseite des Verschlußdeckels (11) eingeformte, umlaufende Rille (42) zur Aufnahme des Palettenrahmens (18) einer gestapelten, zusammengelegten Behältereinheit.

4. Palettenbehälter nach einem der Ansprüche 1 bis 3, dadurch gekennzeichnet, daß die glatten, aus Kunststoff hergestellten Wandteile (21-24) des Stützeinsatzes (5) durch flexible Scharnierbänder (25) miteinander verbunden sind, die sich den gerundeten Eckbereichen (26) des dünnwandigen Kunststoff-Innenbehälters (6) anpassen, und das vordere (21) und das hintere Wandteil (22) zusätzlich mittig faltbar sind.

5. Palettenbehälter nach einem der Ansprüche 1 bis 4, dadurch gekennzeichnet, daß die vier Gitterwände (27-30) des Außenmantels (2) durch gerundete Eckbleche (31) mit an diesen angebrachten Scharnieren (32) miteinander verbunden sind, wobei die Form der Eckbleche (31) der abgerundeten Form der Eckbereiche (26) des Kunststoff-Innenbehälters (6) und den an diesen anliegenden Scharnierbändern (25) des Stützeinsatzes (5) angepaßt ist.

6. Palettenbehälter nach einem der Ansprüche 1 bis 5, dadurch gekennzeichnet, daß die vordere und die hintere Gitterwand (27, 28) des Außenmantels (2) mittig geteilt und die jeweiligen Wandhälften (27a, 27b; 28a, 28b) durch Scharniere (37) miteinander verbunden sind, eine Seitenwand (29) des Außenmantels (2) mittels verschiebbarer Scharniere (38) an einem langen Abschnitt des oberen Randes (39) des Aufsatzrahmens (35) der Bodenwanne (19) der Palette (12) schwenkbar befestigt ist und die andere Seitenwand (30) oder beide Seitenwände (29, 30) sowie die Wandhälften (27a, 27b; 28a, 28b) der vorderen und der hinteren Gitterwand (27, 28) des Außenmantels (2) mittels lösbarer Krallen (40) an den beiden langen und den beiden kurzen Abschnitten des oberen Randes (39) des Aufsatzrahmens (35) befestigt sind.

7. Palettenbehälter nach Anspruch 6, gekennzeichnet durch lösbare Verriegelungen (41) für die vordere (27) und hintere Wand (28) des Gittermantels (2) am oberen Rand (39) des Aufsatzrahmens (35).

8. Palettenbehälter nach einem der Ansprüche 1 bis 7, gekennzeichnet durch eine Einsatzwanne aus Kunststoff zum Transport von Schüttgut.

9. Palettenbehälter nach einem der Ansprüche 1 bis 8, gekennzeichnet durch eine Platte (45) oder eine Klappe zum Verschließen der für den Entnahmehahn (10) des Kunststoff-Innenbehälters (6) im Aufsatzrahmen (35) der Palette (12) vorgesehenen Zugangsöffnung (43) und des vorne offenen Mittelfußes (44) des Palettenrahmens (18) im Auslaufbereich unter dem Entnahmehahn (10) beim Transport von Stück- und von Schüttgut.

## Claims

1. Pallet container (1) for use as a single- and multi-way container, with a base trough (19) of sheet metal or plastic having a base (20) in the form of a discharge base and secured to a pallet frame (18) of metal, plastics or timber which can be handled by a fork-lift truck, a shelf-servicing apparatus or the like, and with a collapsible outer covering (2) detachably securable to the pallet (12) comprising a metal lattice of sheet metal and a support insert (5) abutting on the outer covering (2) comprising wall portions (21-24) collapsible into a package, the pallet container (1) being optionally usable for transport or storage of liquids, with a thin-walled plastic inner container (6) abutting on the support insert (5), and which has a discharge base (17) and is accommodated in a positive-locking fashion by the base trough (19) of the pallet (12) or which may be used for transport and storage of bulk materials, with an inner bag of plastic film or textile fabric, and which may be used after extraction of the inner container (6) with the support insert (5) for conveying and storage of bulk material, characterised in that there is secured to the outer edge (34) of the flat base trough (19) of the pallet (12) a mounting frame (35) of sheet metal or plastic, which contains a stowage space (36) for the outer covering (2) and the support insert (5) in the collapsed condition (2', 5') for empty transport and storage of the pallet container (1).

2. Pallet container according to claim 1, characterized by a lid (11) of plastic or sheet metal for closing the transport and storage space in the operative condition of the container (1) and formed by the outer lattice (2) and the support insert (5), and for closing the stowage space (36) of the pallet (12) in the collapsed condition of the container (1).

3. Pallet container according to claim 2, characterised by a surrounding groove (42) integrally formed in the upper side of the closure lid (11), for receiving the pallet frame (18) of a stacked, collapsed container unit.

4. Pallet container according to one of claims 1 to 3, characterised in that the smooth wall portions (21-24) of the support insert (5), made from plastic, are connected together by flexible hinge strips (25), which adapt to the rounded corner regions (26) of the thin-walled plastic inner container (6), and the forward (21) and the rear wall portion (22) are in addition foldable in the middle.

5. Pallet container according to one of claims 1 to 4, characterised in that the four lattice walls (27-30) of the outer covering (2) are connected together by rounded corner plates (31) with hinges (32) attached thereon, the shape of the corner plates (31) being adapted to the rounded shape of the corner regions (26) of the plastic inner container (6) and the hinge strips (25) of the support insert (5) abutting thereon.

6. Pallet container according to one of claims 1 to 5, characterised in that the forward and the rear lattice wall (27, 28) of the outer covering (2) are divided in the middle and the respective wall halves (27a, 27b; 28a, 28b) are connected together by hinges (37), one side wall (29) of the outer covering (2) being pivotally secured by means of displaceable hinges (38) on a long section of the upper edge (39) of the mounting frame (35) of the base trough (19) of the pallet (12), and the other side wall (30) or both side walls (29, 30) and the wall halves (27a, 27b; 28a, 28b) of the forward and of the rear lattice wall (27, 28) of the outer covering (2) are attached by means of releasable claws (40) to the two long and two short sections of the upper edge (39) of the mounting frame (35).

7. Pallet container according to claim 6, characterised by releasable locking means (41) for the forward (27) and rear wall (28) of the lattice covering (2) on the upper edge (39) of the mounting frame (35).

8. Pallet container according to one of claims 1 to 7, characterised by an insert trough of plastic for transporting bulk material.

9. Pallet container according to one of claims 1 to 8, characterised by a plate (45) or a flap for closing the access opening (43) provided for the discharge cock (10) of the plastic inner container (6) in the mounting frame (35) of the pallet (12) , and of the forwardly open central foot (44) of the pallet frame (18) in the discharge area beneath the discharge cock (10) during the transport of particulate and bulk material.

## Revendications

1. Récipient-palette (1), qui est utilisé comme récipient à n'utiliser qu'une fois ou comme récipient réutilisable, ayant une cuvette (19) de fond en tôle ou en matière plastique qui a un fond (20) réalisé en fond d'évacuation et qui est fixée à un cadre (18) de palette en métal, en matière plastique ou en bois pouvant être manipulé par un chariot élévateur, un transélévateur ou analogue, une enveloppe (2) extérieure repliable, fixée de manière amovible à la palette (12) et constituée d'une grille métallique ou en tôle, et un insert (5) de soutien qui est constitué de pièces (21 à 24) de parois pouvant être repliées en un paquet et qui s'applique à l'enveloppe (2) extérieure, le récipient-palette (1) pouvant être muni au choix, pour transporter et pour stocker des liquides, d'un récipient (6) intérieur en matière plastique à parois minces, qui s'applique à l'insert (5) de soutien, qui Comporte un fond (17) d'évacuation et qui est recu avec complémentarité de forme par la cuvette (19) de fond de la palette (12), ou, pour transporter et pour stocker des produits en vrac, d'un sac intérieur constitué d'une feuille de matière plastique ou d'une matière textile, et, une fois le récipient (6) intérieur retire avec l'insert (5) de soutien, le récipient-palette pouvant être utilisé pour convoyer et stocker des marchandises de détail, caractérisé en ce qu'il est fixé au bord (34) extérieur de la cuvette (19) de fond plane de la palette (12) un cadre (35) de couronnement en tôle ou en matière plastique, qui comporte une zone (36) de retenue pour l'enveloppe (2) extérieure et l'insert (5) de soutien en l'état (2', 5') replié, pour le transport à vide et le stockage du récipient (1) palette.

2. Récipient-palette suivant la revendication 1, caractérisé par un couvercle (11) en matière plastique ou en tôle servant, en l'état de fonctionnement du récipient (1), à fermer la zone de transport et de stockage formée par l'enveloppe (2) grillagée et l'insert (5) de soutien et servant, en l'état replié du récipient (1), à fermer la zone (36) de retenue de la palette (12).

3. Récipient-palette suivant la revendication 2, caractérisé par une rainure (42) ménagée dans la face supérieure du couvercle (11) de fermeture, faisant le tour et servant à recevoir le cadre (18) de palette d'une unité de récipients repliée et empilée.

4. Récipient-palette suivant l'une des revendications 1 à 3, caractérisé en ce que les pièces (21 à 24) de parois lisses, fabriquées en matière plastique, de l'insert (5) de soutien sont reliées entre elles par des bandes (25) souples, qui forment charnières et qui s'adaptent aux zones (26) d'angles arrondis du récipient (6) intérieur en matière plastique à parois minces, et en ce que la pièce (21) de paroi avant et la pièce (22) de paroi arrière sont de plus repliables au milieu.

5. Récipient-palette suivant l'une des revendications 1 à 4, caractérisé en ce que les quatre parois (27 à 30) de grilles de l'enveloppe (2) extérieure sont reliées entre elles par dès tôles (31) arrondies formant cornières et comportant des charnières (32) qui y sont montées, la forme des tôles (31) formant cornières étant adaptée à la forme arrondie des parties (26) d'angles du récipient (6) intérieur en matière plastique et aux bandes (25) formant cornières et s'y appliquant de l'insert (5) de soutien.

6. Récipient-palette suivant l'une des revendications 1 à 5, caractérisé en ce que la paroi (27) avant de grille et la paroi (28) arrière de grille de l'enveloppe (2) extérieure sont fendues au milieu, en ce que les moitiés (27a, 27b ; 28a, 28b) de parois associées sont reliées entre elles par des charnières (35), en ce qu'une paroi (29) latérale de l'enveloppe (2) extérieure est fixée basculante à un grand côté du bord (39) supérieur du cadre (35) de couronnement de la cuvette (19) de fond de la palette (12) et en ce que l'autre paroi (30) latérale ou les deux parois (29, 30) latérales ainsi que les moitiés (27a, 27b ; 28a, 28b) de parois de la paroi (27) avant de grille et de la paroi (28) arrière de grille de l'enveloppe (2) extérieure sont, au moyen de crampons (40) amovibles, fixées aux deux grands côtés et aux deux petits côtés du bord (39) supérieur du cadre (35) de couronnement.

7. Récipient-palette suivant la revendication 6, caractérisé par des dispositifs (41) de verrouillage amovibles, destinés à la paroi (27) avant et à la paroi (28) arrière de l'enveloppe (2) grillagée et prévus sur le bord (39) supérieur du cadre (35) de couronnement.

8. Récipient-palette suivant l'une des revendications 1 à 7, caractérisé par une cuvette en matière plastique à insérer pour le transport de produits en vrac.

9. Récipient-palette suivant l'une des revendications 1 à 8, caractérisé par une plaque (45) ou un volet servant à fermer l'ouverture (43) d'accès, prévue dans le cadre (35) de couronnement de la palette (12) pour le robinet (10) de soutirage du récipient (6) intérieur en matière plastique, et le pied (44) avant ouvert, situé au milieu, du cadre (18) palette dans la zone de sortie située au-dessous du robinet (10) de soutirage lors du transport de marchandises de détail et de produits en vrac.
